# EUROPEAN PATENT SPECIFICATION

(11) **EP 2 820 942 B1**
(45) Date of publication and mention of the grant of the patent: **15.02.2017**
(21) Application number: 14187355.4
(22) Date of filing: 28.03.2014
(51) Int. Cl.: A01K 5/00, A01F 25/20, A01K 5/02, B66C 3/04, A01F 29/00

(54) **GRABBER FOR SEPARATING FEED FOR LIVESTOCK**
GREIFHAKEN ZUR TRENNUNG VON VIEHFUTTER
GRAPPIN POUR SÉPARER DU FOURRAGE DE BÉTAIL

(30) Priority: 28.03.2013 NL 2010541; 29.08.2013 NL 2011357
(43) Date of publication of application: 07.01.2015
(62) Divisional of application: 14162382.7
(73) Proprietor: Liet, Cornelis Hendricus, 7581 TJ Losser (NL)
(72) Inventor: Liet, Cornelis Hendricus, 7581 TJ Losser (NL)
(74) Representative: Zonneveld, Hendrik Jan

(56) References cited:
- BE-A2- 863 397
- DE-A1- 2 611 648
- DE-A1- 4 327 864
- NL-A- 7 503 185
- US-A- 6 126 216
- US-B1- 6 347 464

## Description

The invention relates to a grabber for separating feed for livestock.

Feed, such as silage, can be made up of grass, mixtures of grass and clover, cereals such as wheat, barley or mixtures thereof or mixtures of cereals with peas or beans. Cut silage compacted in a silage pit is usually referred to as "blocks", while feed compacted in a baling press is usually referred to as "bales". On compacting a layered structure is formed.

Lely markets an automatic feeding system under the trade name Vector®, which has been described int. al. in the publication "*Lely voedt automatisch" ("Lely's automatic feeding"),* G. Zevenbergen, published in Veehouderij Techniek, June 2012. This system involves blocks of feed being deposited in a feed kitchen. A grabber grabs feed from a block to put it in a mixing carriage. In the mixing carriage the feed, originating from different blocks, is mixed and conveyed to the livestock to be fed. For each quantity of separated feed the grabber has to be moved back and forth to the mixer. This has to be done at a moderate speed in order to prevent the suspended grabber from swinging. Only when the grabber is finished and has loaded all required feed components into the mixer can the mixer convey the feed to a feeding alley. Hence a lot of time is needed to mix the feed from the bales and convey it to the feeding alley. The grabber is comparatively heavy and impossible to control precisely and for instance can easily land on the bale at an angle, as a result of which the bale can be damaged and partially fall apart. The quantity of material grabbed by the grabber cannot be dosed precisely. The space between the grabber and the mixer varies. Starting, slowing down and positioning the grabber takes up a lot of time.

Separating feed from a bale or block should be done in such a way that the structure of the remaining part of the block or bale remains intact and does not break off in order to prevent oxygen from intruding in the bale and setting decomposition processes in motion. Using a grabber can cause the blocks to break and fall apart, as a result of which the remaining feed will decompose more quickly. Also, such a grabber makes precise dosing impossible. Furthermore, feed will fall from the grabber when it is moved to the mixing carriage. Nor is the grabber able to properly pick the last remnants of the block off the floor. Feed remnants left behind may start to ferment and accelerate the spoiling of the other feed in the feed kitchen. Because of this the feed kitchen will need to be cleaned and restocked on a regular basis.

US 6,126,216 discloses a bucket comprising a pair of two opposed grabbing elements. Such grabbers do not enable separating accurately dosed portions from baled feed. The same holds for the grabber disclosed in NL 7503185, which is typically used for loose bulk material.

BE 863 397 A2 discloses a grabber with grabbing teeth and vertical side plates provided with knives. A further teethed grabber is disclosed by DE 26 11 648 A1.

DE 43 27 864 A1 discloses a mixing gripper with a lower side formed by rows of milling cutters.
The present invention has for its object to provide a grabber which will enable collection of feed, for instance from blocks or bales or loose feed, efficiently and quickly, as well as precise dosing thereof.

The object of the invention is attained with a grabber according to claim 1, which makes it possible to separate accurately dosed portions of baled feed.

Optionally, the grabber may be part of an apparatus for processing feed comprising:
- a main frame;
- a collecting bin;
- the grabber which can be moved vertically,
wherein both the collecting bin and the grabber are supported by the main frame.

Thus the grabber and/or the collecting bin can be moved horizontally between a first position, where the grabber is placed above the collecting bin, and a second position, where the grabber can be positioned above a bale or block.

In a special embodiment the apparatus comprises:
- a main frame with a feed pick-up zone;
- a collecting bin supported by the main frame;
- a support frame, which can be moved horizontally along a guide on the main frame between a first position where the support frame is positioned over the feed pick-up zone and a second position above the collecting bin position;
- the grabber, which can be moved vertically along a guide in the support frame.

When a bale or block or a quantity of loose feed is within the range of the grabbing device, the grabbing device can be moved downwards to separate feed from the top of the bale or the block. Next, the support frame with the grabbing device can be moved to the position above the collecting bin to then put the separated feed in the collecting bin. Next, the support frame with the grabbing device can be repositioned above the feed pick-up zone in order to remove more feed from the same block or bale, or from a new block or bale or, optionally, from a stock of uncompacted feed. Once all desired feed components have been collected in the collecting bin in the desired quantities, the collecting bin can be emptied into a mixer. Preferably, the contents of the collecting bin are essentially the same as those in the mixer, so that the collecting bin is able to fill the mixer in one go. When the mixer is subsequently moved to the livestock to be fed, the collecting bin can be refilled at the same time. Because the mixer and the collecting bin can be used simultaneously, the system's capacity is doubled.

The grabbing device can be moved back and forth more rapidly between the bale and the collecting bin than in the case of grabbers from older systems. After the collecting bin has been emptied into the mixer, the grabbing device can continue straightaway with separating feed, without having to wait for the return of the mixer, which also brings time savings.

The collecting bin can for instance be moved, for instance tilted, into an outfeed position for feeding out feed. The feed can thus be put into a mixing bin, such as a stationary mixer or a mixing robot, or onto an outfeed conveyor or similar outfeeding means. In this process the feed can for instance be mixed with other feed components.

The apparatus can for instance be configured such that the collecting bin can be moved vertically by means of a vertical guide between a bottom position and a top position, in which process the collecting bin when in the top position can be tilted into the outfeed position. In such an embodiment the collecting bin can be placed low down, so that even in low positions, when the bale or the block is nearly finished, the grabbing device is still able to put the separated feed in the collecting bin.

In addition, the grabbing device can comprise separating means, such as one or more saws or milling rollers, for separating the cut-off top layer. The feed material thus is reduced in size and as a result can be mixed more easily and more rapidly.

The grabbing device can for instance comprise claws, each provided with a base plate with a cutting edge for cutting off a horizontal top layer from the bale. The claws can be moved between an open position, where the grabbing device can be positioned over a bale or block, and a grabbing position, where the grabber is closed. The claws can for instance be L-shaped or J-shaped in cross-section.

In a specific embodiment the L- or J-shaped claws can be provided with side walls with a cutting face connecting the outermost points of the L- or J-shape with one another. As a result, the cutting faces of two opposing claws connect up when the grabbing device is closed and it is no longer possible for feed to fall out. Because the side walls of the claws cut through the feed themselves, individual separating means are no longer required.

In a special embodiment the claws comprise knives which extend the full length of the cutting edges of the side walls and which can be moved up and down by means of a guide in a direction parallel to the cutting edge as the claws move between the resting position and the grabbing position. The feed is easier to cut off as a result.

The claws can for instance be provided with slots for receiving ejector plates, which are mounted to the support frame and extend in a direction parallel to the direction of movement of the claws between the resting position and the grabbing position. This way the feed that is placed inside the claws is ejected from the claws by the ejector plates during unloading.

In order to have the bottom edge of the claws travel along a straight line as much as possible during movement of the claws, the movement can be guided by means of a curved horizontal slotted guide corresponding to the guide as discussed above in relation to the circular saws. The advantage of a straight path of movement is that the last remnants of feed can be removed from the floor more easily by the claws.

The claws can for instance be positioned in two opposing rows. In a special embodiment the claws can be moved independently of each other between the resting position and the grabbing position. This way precise dosing is enabled. When only a small quantity of feed is needed, it is not necessary to cut off an entire top layer, but only a part thereof.

In the case of such a grabbing device the means for reducing the size of the feed can for instance be made up of parallel saws, which can for instance be moved between the claws. The saws can for instance comprise circular saws, which can be moved along a guide to thus pass through the cut-off layer of feed. The circular saws in that case can be moved in a flat, straight horizontal line. This can be achieved for instance with a drive rod coupled to rotating shaft of the circular saws, with a top end of the drive rod pivoting around a top shaft which can be moved up and down along a vertical guide in het support frame. In that case a second guide component of the drive rod disposed between the top shaft and the sawing shaft can be moved back and forth by means of a second guide between two outermost points on a horizontal line, with the second guide being curved such that the circular saws can be moved back and forth in a straight line. A horizontal movement of the circular saws causes the feed of the cut-off top layer to be separated, after which it can be dosed and mixed precisely.

In order to reduce the risk of separated feed sticking to the saw teeth, the circular saw can be provided with comparatively short cutting teeth. Thus the cutting teeth can protrude for 8 mm or less, for instance 4 mm or less, vis-à-vis the inner diameter of the saw teeth. Good results are obtained for instance with teeth of 3 - 4 mm in length.

The inner diameter can for instance be 600 mm or more, for instance 700 mm or more. The length of the cutting teeth can for instance be adjustable, or it can be fixed.

In a more specific embodiment of the circular saw the angle η between the extension L of the cutting edge of the saw tooth and the radial line between the centre M of the saw blade and the outermost vertex N of the saw tooth can be an acute angle, for instance an angle of 0 < η < 25 degrees.

The tip of the cutting tooth cuts and pulls on the crop to be separated. By keeping the cutting teeth short, the overall pulling power is limited, so that the circular saw will no longer get easily stuck. Preferably, the length of the cutting teeth is such that in the case of optimum saw speed for a particular type of feed, the net pulling power of the joint meshed teeth is such that the feed to be processed is pulled towards the saw without the saw getting stuck in the feed. The optimum speed varies per type of feed. Thus dry hay or straw will require a slower speed, while in the case of for instance maize a higher speed can be employed. Because the saw pulls the feed towards it, the saw need not exert as much forward pressure on a block or bale or other type of feed. Particularly good results are attained if the cutting teeth protrude vis-à-vis the circular contour of the saw blade which at least near the cutting teeth, or in its entirety, is continuously circular, that is to say without a serrated pattern between the teeth such as is customary for ordinary circular saw blades.

If use is made of a standard circular saw blade with deeper teeth, then the bottom section of the teeth can be covered by means of a flat ring. The tips of the teeth will then protrude vis-à-vis the ring, for instance over 8 mm or less, such as for instance 3 - 4 mm. The outer circumference of the ring thus effectively forms the inner diameter of the saw teeth. In order to keep the required cutting pressure low, such a ring preferably has a chamfered outer circumference. Alternatively, the ring can have a flattened inner circumference.

The collecting bin can preferably be moved from a collecting position, for instance be tilted or lifted, to an outfeed position for feeding out feed.

In a special embodiment the collecting bin is provided with a bottom comprising an outfeed conveyor, which continues on an outfeed side of the collecting bin outside the outfeed bin. As a result the feed can be dumped gradually and in doses from the collecting bin, for instance into a mixing bin, such as a mixing robot.

To enable proper alignment of the grabbing device with the bale or block of feed to be processed, the grabbing device placed low down can be moved in a horizontal alignment direction transverse to the horizontal transport direction. To next be able to recentre the grabbing device vis-à-vis the collecting bin, the main frame can be provided with a centring guide for centring the grabbing device vis-à-vis the main frame when the grabbing device is moved vertically upwards.

In order to be able to move the main frame with the grabbing device to a next row of bales or blocks, the apparatus can be provided with a cross conveyor. This cross conveyor can for instance be made up of a plate which can be moved sideways along a guide, such as a floor rail. The main frame can be disposed on the plate and then be moved sideways to a next row of bales or blocks.

The main frame, which preferably is provided with wheels, can for instance be moved with the aid of a pulling component between a retracted position, where the main frame has been wheeled onto the plate, and an extended position, where the main frame has been wheeled off the plate. Such a pulling component can for instance comprise a folding frame which on being collapsed pulls the main frame onto the plate and on being unfolded pushes the main frame off the plate. Such a folding frame can for instance comprise a first leg or window with a bottom end connected to the plate and a top end hinged to the top end of a second leg or window with a bottom end connected to the main frame. Such a folding frame enables very precise positioning of the main frame with the grabber and the collecting bin.

To enable precise dosing of the feed to be separated, the frame can be provided with one or more weighing means.

The frame can for instance be provided with wheels, such as swivel wheels. The wheels can be provided with one or more weighing bars. Also, the wheels can be provided with a driving mechanism.

The grabber is provided with two grabber components having bottom edges facing one another, wherein the two grabber components can be moved vis-à-vis one another between an open position, where the bottom edges have been moved apart, and a closed position, where the bottom edges abut against one another and the grabber components enclose a grabbing zone, wherein at least one of the grabber components may for example be provided with one or more separating means inside a grabbing zone enclosed by the grabber components. Such separating means can for instance take the form of one or more knives, for instance a row of parallel circular knives or circular saws on a common drive shaft. Thus the two grabber components can be provided with a row of parallel circular knives or circular saws. The two rows of circular saws can have moved in axial direction vis-à-vis one another, so that in the closed position of the grabber the circular saws of one row partially overlap with the circular saws of the other row in side view of the grabber.

The two grabber components can for instance each be tilted around their own pivot, with the two pivots being parallel. For synchronisation of the movement of the grabber components, the two grabber components can be provided with toothed segments, with the toothed segments of the two grabber components meshing together. Such a toothed segment can for instance extend from the pivot in the direction of the toothed segment of the other grabber component, with the two toothed segments being provided in mirror image with teeth of such curvature and length that the two sets of teeth mesh together as the grabber components move between the open position and the closed position.

In addition, the grabbing device can comprise a frame with a slotted guide for the two grabber components along which the grabber components are moved up and down as they move between the open position and the closed position of the grabber, such that the cutting edges follow an essentially horizontal path.

The disclosure will be elucidated further with reference to the drawings. Herein:
- Figure 1:: is a schematic representation in side view of an apparatus for processing feed for livestock;
- Figure 2:: is a partial representation of the apparatus of Figure 1 in cross-section;
- Figure 3:: is a representation in front view of the grabbing device of the apparatus of Figure 1 with the protective cover removed in part;
- Figure 4:: is a schematic representation in cross-section of another exemplary embodiment;
- Figure 5:: is a second representation in cross-section of the apparatus of Figure 4;
- Figure 6:: is a schematic representation of the position of the circular saws between the claws;
- Figure 7:: is a schematic representation of an alternative embodiment;
- Figure 8:: is a schematic representation in top view of the apparatus of Figure 1 in a feed kitchen;
- Figure 9:: is a schematic representation in cross-section of a further potential embodiment;
- Figure 10:: is a representation of a longitudinal section along the line X - X in Figure 9;
- Figure 11:: is a schematic representation of the apparatus of Figure 1 with a bin of loose feed;

- Figure 12:: is a schematic representation of a potential embodiment of an apparatus according to the invention.

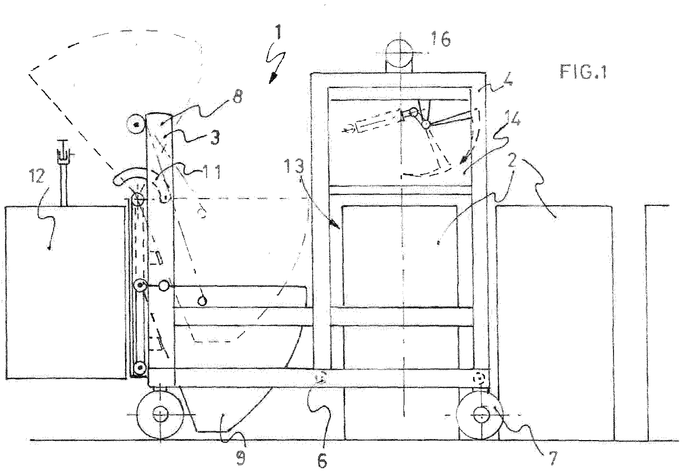

Figure 1 shows an exemplary embodiment of an apparatus 1 for processing feed, such as loose feed or feed in the form of bales or blocks 2. The apparatus 1 comprises a mobile main frame 3 with a support frame 4 which can be moved horizontally vis-à-vis the main frame 3 by means of a roller guide 6 near the under-side of the main frame 3. The main frame 3 is provided with swivel wheels 7. At one end the main frame 3 comprises a vertical guide 8, along which a collecting bin 9 can be moved vertically between a bottom position - shown as a continuous line in Figure 1 - and a top position - shown as a dotted line. In the top position the collecting bin can be tilted by means of a tilting guide 11. This way the collecting bin 9 can be tipped to empty it, for instance into a mixing bin or mixing robot 12, such as shown in Figure 1.

At the other end the frame 3 comprises a feed pick-up zone 13, where a bale or block of feed 2 can be picked up by positioning the apparatus 1 such that the support frame 4 is positioned over the block or the bale 2 in question.

The support frame 4 carries a grabbing device 14, which can be moved downwards from a resting position such as shown in Figure 1, driven by an electromotor 16 or similar driving mechanism arranged on top of the support frame.

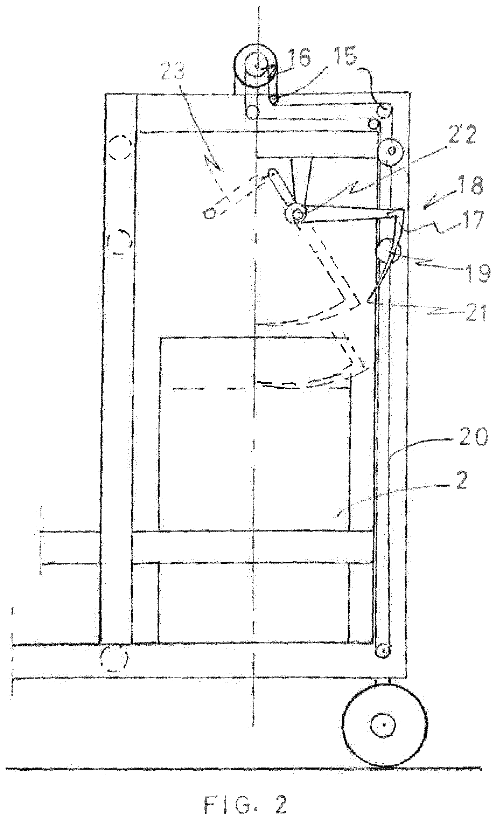

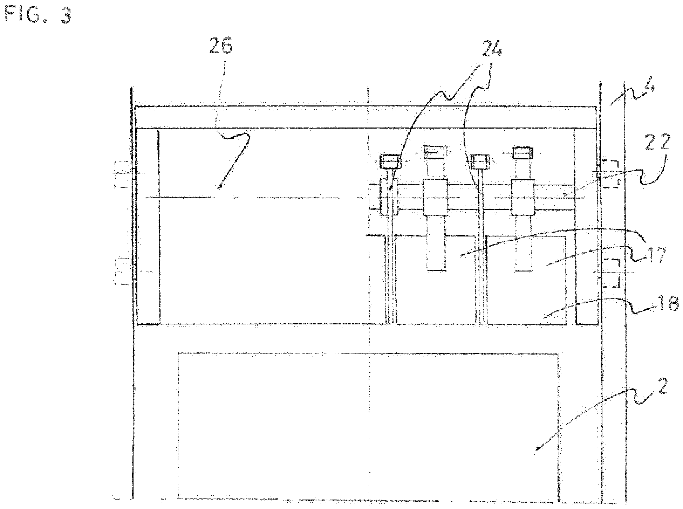

The grabbing device 14 comprises two opposing rows of L-shaped claws 17, such as shown in Figures 2 and 3. Each claw 17 is provided with a back plate 18 and a base plate 19 extending from the bottom edge of the back plate 18 in the direction of the opposing row of claws 17. At the free end the base plate comprises a cutting edge 21 for cutting off a horizontal top layer of the bale 2. The claws 17 can be pivoted around a pivot 22 between a resting position where the claws 17 can be positioned over the top of a bale or block 2, and a grabbing position where the cutting edges 21 of the claws 17 penetrate into the bale 2 and cut off a top layer. In Figure 2 the claw 17 is shown in the resting position, represented as a continuous line, while the grabbing position is represented as a dotted line. The claws 17 in that case are propelled individually with the aid of hydraulic cylinders 23 under the control of a control unit (not shown).

In Figure 3 the row of claws 17 is shown in the operating position in front view. If only a small quantity of feed is required, the control unit will trigger only part of the claws 17 to cut off part of the top layer of the block or the bale.

In between the claws 17 the grabbing device 14 comprises parallel circular saws 24 for separating the cut-off top layer of the bale 2. After the claws 17 have sliced off the top layer of the block or the bale 2, the circular saws 24 saw the slice, causing it to fall apart into loose dosable feed.

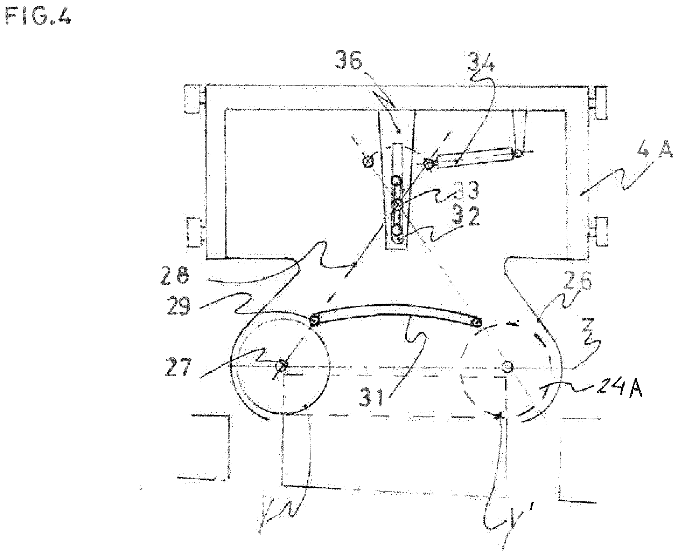

An enveloping protective cover 26 is arranged around the claws 17 and the circular saws 24. The protective cover 26 is shaped such that the claws 17 and the circular saws 24 can be moved in the various operating and resting positions, such as is illustrated in Figure 4 for another potential embodiment of the apparatus.

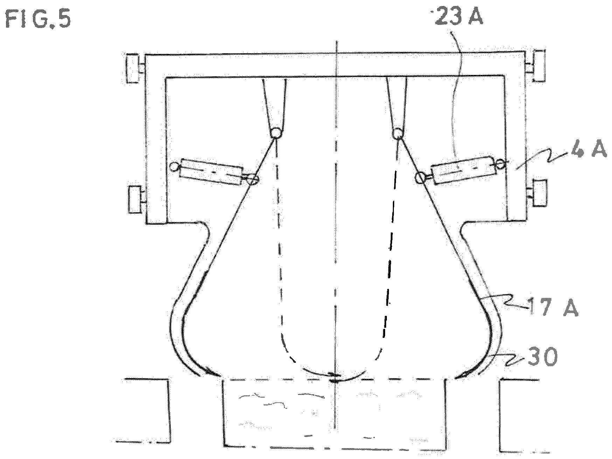

The apparatus of Figure 4 comprises a row of circular saws 24A which can be moved by means of slots between claws 17A (see Figure 5). The circular saws 24A are capable of rotation around a common shaft 27 and are moved with the aid of a connecting rod 28, schematically represented by means of a centre line. The connecting rod 28 comprises a bottom roller guide 29, which can move along a curved bottom guide 31 in the enveloping protective cover 26, and a top shaft 33, which can move along a vertical guide 32 positioned symmetrically above the bottom guide 31 in an arm 36 of the support frame 4A. The two outermost points of the guide 31 are in an essentially horizontal straight line. Between the outermost points the guide 31 is bent upwards. At the top end the connecting rod 28 is driven by a hydraulic cylinder 34. The cylinder 34 moves the top end of the connecting rod 28 back and forth, which movement is converted by means of the guides 31, 32 into a reciprocal movement of the circular saw 24. The horizontal guide 31 is bent such that the circular saws 24A are moved back and forth in a straight line Z between a first outermost position - illustrated in the drawing as the continuous line Y - and a second outermost position - illustrated in the drawing as the dotted line Y'.

Figure 5 shows a different cross-section of the apparatus of Figure 4. This cross-section shows the claws 17A, which in this embodiment comprise a curved bottom end 30. The claws are hinged to suspension points 25 of the support frame 4A and can be moved in one another's direction by means of cylinders 23A.

In another potential embodiment also the claws 17, 17A can be moved up and down by means of a vertical guide. As a result of this the last remnants of feed on the floor can be removed more easily, so that as little residual feed as possible is left on the floor.

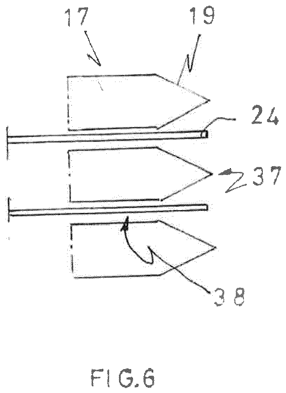

Figure 6 is a schematic representation of the positioning of the parallel circular saws 24 between the claws 17. The cutting edges 21 of the base plates 19 are configured as triangular points 37 to allow a better penetration into the compacted feed. The circular saws 24 are positioned in a slot 38 between the claws 17 in a position which is always midway between two points 37, because there the feed will concentrate when the claws 17 are pushed along through the compacted feed. The tips of the teeth can be rounded to ensure that less feed sticks to the knives.

After the claws 17 have cut off the top layer of a bale or block 2, the circular saws 24 separate the top layer into dosable feed. The claws 17 remain in the grabbing position and in doing so keep the separate feed together. The grabbing device 14 is put in the top position with the aid of a motor drive 16 and steel cable 20 guided along of a pulley guide 15. Next, the support frame 4 driven by a hydraulic cylinder (not shown) is moved to the collecting bin 9, which is in the top position. When the support frame 4 with the grabbing device 14 has been positioned above the collecting bin 9, the claws 17 are moved apart and the separated feed falls into the collecting bin 9. Next, the support frame 4 with the grabbing device 14 is returned to the original position, where the support frame 4 can be placed over a bale 2 once again.

In addition, the apparatus 1 is provided with weighing means, made up of weighing bars at the swivel wheels 7 (not shown). This enables the quantity of separated feed in the collecting bin 9 and between the claws 17 of the grabbing device 14 to be weighed precisely. The control unit can be programmed to make a continuous comparison between the weighed quantity of separated feed in the apparatus 1 and a value for the required quantity of feed entered beforehand. As soon as the desired quantity has been collected, the control unit can put the grabbing device 14 in the resting position.

To empty the collecting bin 9, the apparatus 1 can travel to the mixer 12 and/or the mixer 12 can be moved to the apparatus 1. The collecting bin 9 can then be tilted from the highest position to the outfeed position, where the feed from the collecting bin 9 is put in the mixer 12. If so desired, the feed in the mixer 12 may be mixed with further feed components.

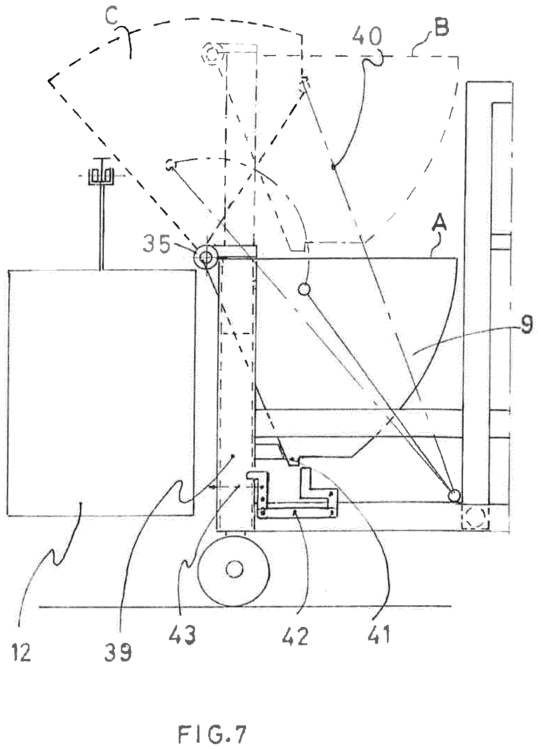

Figure 7 shows an alternative embodiment where the collecting bin 9 is connected with a hinged flange 35 to a vertical hydraulic cylinder 39, which can move the collecting bin 9 between a collecting position A (shown as a continuous line) and a high position B (shown as a dotted line). In the high position B the collecting bin 9 can be moved over a bale or block, so that the apparatus as a whole can be positioned over a row of bales. From the low collecting position A the collecting bin 9 can be tilted with the aid of a schematically represented second cylinder 40 into an unloading position C, also shown as a dotted line. This is the position in which the collecting bin is tipped to empty it, for instance into a mixer or mixing robot 12.

On the under-side the collecting bin 9 is provided with a boss or ridge 41. A tilting lock 42 hooks behind the ridge 41 in order to prevent the collecting bin 9 from tipping inadvertently. Using a schematically represented third cylinder 43, the lock 42 can be tilted to one side, whereupon the collecting bin 9 can be tipped.

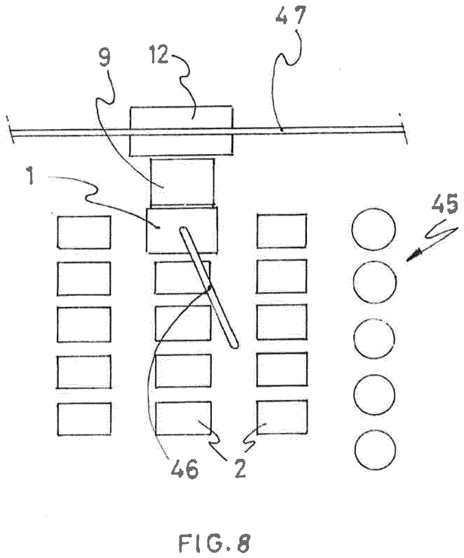

Figure 8 is a schematic representation in top view of a feed kitchen 45 in which an apparatus 1 is arranged. In the feed kitchen 45 there are rows of bales or blocks 2 of different types, both round bales and rectangular bales or blocks. The apparatus 1 is connected to a power cable 46 which can be rolled automatically and is pivotably connected to a suspension means. A mixer 12 can be moved on a rail guide 47 or can travel across the floor. The apparatus 1 is positioned over a front bale 2 of the central row of rectangular bales or blocks.

Different types of feed are cut off different bales or blocks and are weighed and collected in the collecting bin 9 of the apparatus 1 until the collecting bin 9 contains a complete feed mixture of the desired composition. Next, the apparatus 1 travels to a station where the composition is dumped into the mixer 12. If the mixer 12 has not yet returned from a previous feeding alley, the apparatus 1 will await the return of the mixer 12.

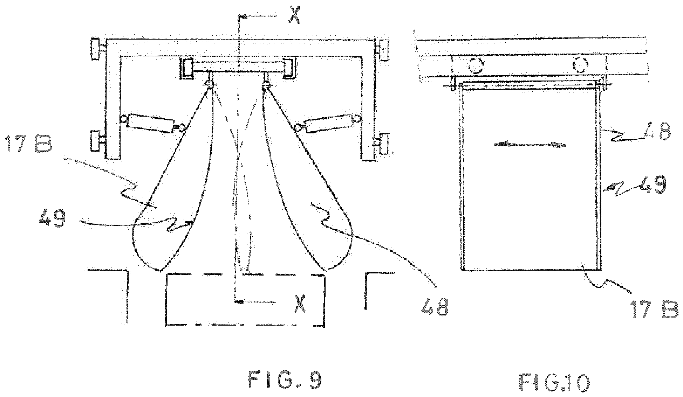

Figures 9 and 10 show an alternative apparatus for processing feed for livestock. The embodiment is the same as the embodiment of Figure 5, except that the claws 17B are provided on either side with side walls 48 each provided with a cutting edge 49. The cutting edges 49 connect the outermost points of the J-shaped claws 17B. This enables the claws 17B to cut through the feed themselves and no separate circular saws or other separating means are required. The cutting edges 49 are curved, so that they overlap with each other to some extent in the closed position of the claws 17B. The cutting edges can for instance be serrated or curved to prevent the crop from sliding down the cutting edges 49.

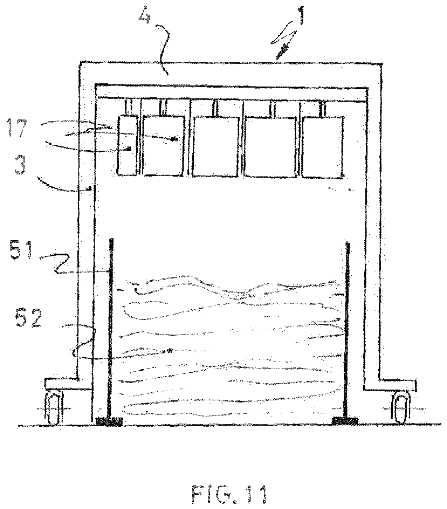

Figure 11 is a schematic representation of the apparatus 1 of Figure 1 with a bin or container 51 disposed in the feed pick-up room 13 beneath the claws 17 of the support frame 4. The bin 51 is filled with loose crop 52. The claws 17 can be moved downwards to grab the loose crop and lift it. The support frame 4 can then be moved in the frame 3 to the collecting bin. Next, the claws 17 can put the collected loose crop in the collecting bin 9.

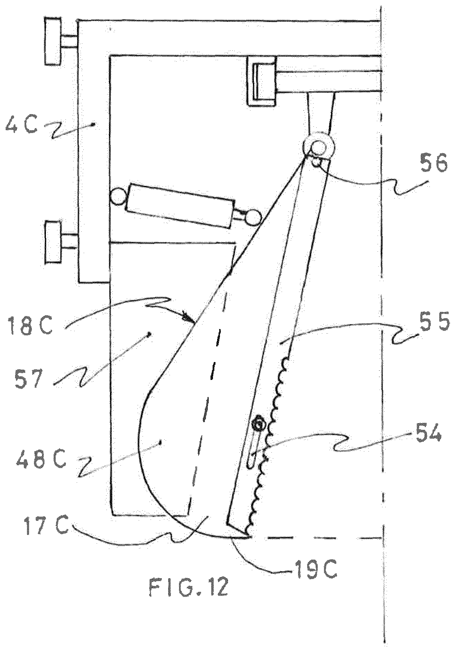

Figure 12 shows a further variation wherein the claws 17C are provided with side walls 48C which are provided with a knife 55 on their free edge. By means of a crankshaft transmission 56 or driven by, for instance, a hydraulic cylinder, the knife 55 is moved up and down along the edge of the side wall 48C of the claw 17C by means of a guide 54 as the claw 17C pivots. This makes cutting the feed off easier. The cutting edge of the base plate 19C is also provided with such a reciprocating knife.

The apparatus further comprises ejector plates 57, which are mounted essentially at right angles to the back plate 18C of the claw. The ejector plates 57 are connected to the support frame 4C. The back plate 18C of the claw comprises slots (not shown) through which the ejector plates protrude. When the claw 17C is moved back and forth, the ejector plates 57 slide into the interior of the claw 17 via the slots. When unloading the feed into the collecting bin, the feed is thus ejected by the ejector plates.

## Claims

1. Grabber (104) for separating feed for live stock, such as bales, blocks or loose fodder, the grabber being provided with two claws (17, 109) which can be moved between an open position and a closed position, wherein the claws are both provided with a base plate (19C) with a cutting edge comprising a reciprocating knife.

2. Grabber according to claim 1, wherein the claws are J-shaped or L-shaped in side view, wherein the L- or J-shaped claws (17, 109) are provided with side walls having a cutting edge, wherein cutting edges connect up when the grabber is closed.

3. Grabber according to claim 2, wherein the claws (17) comprise knives (55) which extend over the full length of the cutting edges of the side walls and which are moveable up and down by means of a guide in a direction parallel to the cutting edge when the claws (17) are moved between the resting position and the grabbing position.

4. Grabber according to any preceding claim, wherein the movement of the claws (17) is guided in order to have the cutting edge of the base plates of the claws travel along a straight line during movement of the claws.

5. Grabber according to claim 4, wherein the grabber (104) comprises a frame (123) with a slotted guide (124) for the two claws (109) along which the claws are moved up and down as the grabber is moved between the open position and the closed position, such that the cutting edges (112) of the base plates follow an essentially horizontal path.

6. Grabber according to any preceding claim, wherein the claws (17) are provided with slots for receiving ejector plates (57), which are mounted to a support frame (4C) and extend in a direction parallel to the direction of movement of the claws (17) between the resting position and the grabbing position.

7. Grabber according to any preceding claim, wherein the claws enclose a grabbing zone (117), wherein at least one of the claws is provided with one or more separating means (116) inside a grabbing zone enclosed by the claws, said separating means being made up of one or more knives, for instance a row of parallel circular knives or circular saws (116) on a common drive shaft (118).

8. Grabber according to claim 7, wherein the two claws (109) are provided with a row of parallel circular knives or circular saws (116), wherein in the closed position of the grabber the circular saws of one row partially overlap with the circular saws of the other row in side view of the grabber.

9. Grabber according to any one of the preceding claims, wherein the two claws (109) can each be tilted around their own pivot (113), wherein the two pivots are parallel and wherein the two claws are provided with a toothed segment (121) extending from the pivot in the direction of the toothed segment of the other claw, wherein the two toothed segments are provided in mirror image with teeth (122) of such curvature and length that the two sets of teeth mesh together as the claws are moved between the open position and the closed position.

10. Grabber according to claim 3, wherein the knives (55) comprise cutting teeth.

## Patentansprüche

1. Greifer (104) zur Trennung von Viehfutter, z. B. Ballen, Blöcken oder losem Futter, wobei der Greifer mit zwei Klauen (17, 109) versehen ist, die zwischen einer offenen Position und einer geschlossenen Position bewegt werden können, wobei die Klauen beide mit einer Grundplatte (19C) mit einer Schneidkante versehen sind, die ein hin- und hergehendes Messer aufweist.

2. Greifer nach Anspruch 1, wobei die Klauen in Seitenansicht J-förmig oder L-förmig sind, wobei die L- oder J-förmigen Klauen (17, 109) mit Seitenwänden versehen sind, die eine Schneidkante haben, wobei Schneidkanten zusammenkommen, wenn der Greifer geschlossen wird.

3. Greifer nach Anspruch 2, wobei die Klauen (17) Messer (55) aufweisen, die sich über die volle Länge der Schneidkanten der Seitenwände erstrecken und die mittels einer Führung in Parallelrichtung zur Schneidkante auf und ab bewegbar sind, wenn die Klauen (17) zwischen der Ruheposition und der Greifposition bewegt werden.

4. Greifer nach einem der vorstehenden Ansprüche, wobei die Bewegung der Klauen (17) geführt wird, damit die Schneidkante der Grundplatten der Klauen während der Bewegung der Klauen auf einer Geraden verfährt.

5. Greifer nach Anspruch 4, wobei der Greifer (104) einen Rahmen (123) mit einer Schlitzführung (124) für die beiden Klauen (109) aufweist, entlang derer die Klauen auf und ab bewegt werden, wenn der Greifer zwischen der offenen Position und der geschlossenen Position bewegt wird, so dass die Schneidkanten (112) der Grundplatten einem im Wesentlichen waagerechten Weg folgen.

6. Greifer nach einem der vorstehenden Ansprüche, wobei die Klauen (17) mit Schlitzen zum Aufnehmen von Ausstoßplatten (57) versehen sind, die an einem Stützrahmen (4C) angebaut sind und sich in Parallelrichtung zur Bewegungsrichtung der Klauen (17) zwischen der Ruheposition und der Greifposition erstrecken.

7. Greifer nach einem der vorstehenden Ansprüche, wobei die Klauen eine Greifzone (117) umschließen, wobei mindestens eine der Klauen mit einer oder mehreren Trenneinrichtungen (116) innerhalb einer von den Klauen umschlossenen Greifzone versehen ist, wobei die Trenneinrichtung aus einem oder mehreren Messern gebildet ist, beispielsweise einer Reihe paralleler Kreismesser oder Kreissägen (116) auf einer gemeinsamen Antriebswelle (118).

8. Greifer nach Anspruch 7, wobei die beiden Klauen (109) mit einer Reihe paralleler Kreismesser oder Kreissägen (116) versehen sind, wobei sich in der geschlossenen Position des Greifers die Kreissägen einer Reihe mit den Kreissägen der anderen Reihe in Seitenansicht des Greifers teilweise überdecken.

9. Greifer nach einem der vorstehenden Ansprüche, wobei die beiden Klauen (109) jeweils um ihre eigene Schwenkachsen (113) gekippt werden können, wobei die beiden Schwenkachsen parallel sind und wobei die beiden Klauen mit einem gezahnten Segment (121) versehen sind, das sich von der Schwenkachse in Richtung des gezahnten Segments der anderen Klaue erstreckt, wobei die beiden gezahnten Segmente spiegelbildlich mit Zähnen (122) solcher Krümmung und Länge versehen sind, dass die beiden Sätze von Zähnen ineinander greifen, wenn die Klauen zwischen der offenen Position und der geschlossenen Position bewegt werden.

10. Greifer nach Anspruch 3, wobei die Messer (55) Schneidzähne aufweisen.

## Revendications

1. Grappin (104) pour séparer du fourrage pour bétail, tel que des balles, des blocs ou du fourrage en vrac, le grappin étant prévu avec deux griffes (17, 109) qui peuvent être déplacées entre une position ouverte et une position fermée, dans lequel les griffes sont toutes deux prévues avec une plaque de base (19C) avec un bord de coupe comprenant un couteau effectuant un mouvement de va-et-vient.

2. Grappin selon la revendication 1, dans lequel les griffes sont en forme de J ou en forme de L sur une vue latérale, dans lequel les griffes en forme de L ou de J (17, 109) sont prévues avec des parois latérales ayant un bord de coupe, dans lequel les bords de coupe se raccordent lorsque le grappin est fermé.

3. Grappin selon la revendication 2, dans lequel les griffes (17) comprennent des couteaux (55) qui s'étendent sur toute la longueur des bords de coupe des parois latérales et qui sont mobiles vers le haut et vers le bas au moyen d'un guide dans une direction parallèle au bord de coupe lorsque les griffes (17) sont déplacées entre la position de repos et la position de grappin.

4. Grappin selon l'une quelconque des revendications précédentes, dans lequel le mouvement des griffes (17) est guidé afin d'avoir le bord de coupe des plaques de base des griffes qui se déplace le long d'une ligne droite pendant le mouvement des griffes.

5. Grappin selon la revendication 4, dans lequel le grappin (104) comprend un bâti (123) avec un guide fendu (124) pour les deux griffes (109) le long duquel les griffes sont déplacées vers le haut et vers le bas lorsque le grappin est déplacé entre la position ouverte et la position fermée, de sorte que les bords de coupe (112) des plaques de base suivent une trajectoire essentiellement horizontale.

6. Grappin selon l'une quelconque des revendications précédentes, dans lequel les griffes (17) sont prévues avec des fentes pour recevoir des plaques d'éjecteur (57) qui sont montées sur un bâti de support (4C) et s'étendent dans une direction parallèle à la direction de mouvement des griffes (17) entre la position de repos et la position de grappin.

7. Grappin selon l'une quelconque des revendications précédentes, dans lequel les griffes enferment une zone de grappin (117), dans lequel au moins l'une des griffes est prévue avec un ou plusieurs moyens de séparation (116) à l'intérieur d'une zone de grappin enfermée par les griffes, lesdits moyens de séparation étant composés d'un ou de plusieurs couteaux, par exemple une rangée de couteaux circulaires parallèles ou des scies circulaires (116) sur un arbre d'entraînement (118) commun.

8. Grappin selon la revendication 7, dans lequel les deux griffes (109) sont prévues avec une rangée de couteaux circulaires parallèles ou de scies circulaires (116), dans lequel dans la position fermée du grappin, les scies circulaires d'une rangée se chevauchent partiellement avec les scies circulaires de l'autre rangée sur une vue latérale du grappin.

9. Grappin selon l'une quelconque des revendications précédentes, dans lequel les deux griffes (109) peuvent chacune être inclinées autour de leur propre pivot (113), dans lequel les deux pivots sont parallèles et dans lequel les deux griffes sont prévues avec un segment denté (121) s'étendant à partir du pivot dans la direction du segment denté de l'autre griffe, dans lequel les deux segments dentés sont prévus en miroir avec des dents (122) d'une courbure et d'une longueur telles que les deux ensembles de dents s'engrènent lorsque les griffes sont déplacées entre la position ouverte et la position fermée.

10. Grappin selon la revendication 3, dans lequel les couteaux (55) comprennent des dents de coupe.
